# EUROPÄISCHE PATENTSCHRIFT

(11) **EP 2 684 300 B1**
(45) Veröffentlichungstag und Bekanntmachung des Hinweises auf die Patenterteilung: **19.10.2016**
(21) Anmeldenummer: 12713620.8
(22) Anmeldetag: 09.03.2012
(51) Int. Cl.: H04B 7/185

(54) **SATELLIT MIT EINER MEHRZAHL VON RICHTANTENNEN ZUM SENDEN UND/ODER EMPFANGEN VON FLUGSICHERUNGS-FUNKSIGNALEN.**
SATELLITE WITH A NUMBER OF DIRECTIONAL ANTENNAS FOR SENDING AND / OR RECEIVING AIR TRAFFIC RADIO SIGNALS.
SATELLITE AVEC UNE PLURALITÉ D'ANTENNES DIRECTIVES POUR L'ÉMISSION ET/OU LA RÉCEPTION DE SIGNAUX RADIO DE TRAFIC AÉRIEN.

(30) Priorität: 11.03.2011 DE 102011013737
(43) Veröffentlichungstag der Anmeldung: 15.01.2014
(73) Patentinhaber: Deutsches Zentrum für Luft- und Raumfahrt e.V., 51147 Köln (DE)
(72) Erfinder: BEHRENS, Jörg, 28355 Bremen (DE); WERNER, Klaus, 38179 Schwülper (DE); HAUER, Lars-Christian, 28355 Bremen (DE); DELOVSKI, Toni, 28217 Bremen (DE)
(74) Vertreter: Aisch, Sebastian
(86) Internationale Anmeldenummer: PCT/EP2012/054117
(87) Internationale Veröffentlichungsnummer: WO 2012/123361

(56) Entgegenhaltungen:
- EP-A1- 1 093 242
- EP-A2- 2 058 956
- US-A1- 2010 117 893

## Beschreibung

Die Erfindung betrifft einen Satelliten mit mindestens einer Sende- und/oder Empfangseinheit, der eine Antennenordnung zum Senden und/oder Empfangen von Flugsicherungs-Funksignalen hat. Die Erfindung betrifft auch eine hierfür geeignete Sende- und/oder Empfangseinheit.

### Stand der Technik

Die Überwachung und Kontrolle des weltweit stetig zunehmenden Luftverkehrs basiert heute überwiegend auf zwei grundlegenden Techniken: Radarüberwachung und sprachbasierte VHF-Funksysteme für das Air-Traffic-Management (ATM). Bei der Radarüberwachung werden mit Hilfe von speziellen Radar-Bodenstationen Funksignale ausgesendet, die dann entweder von einem Flugobjekt an seine Außenoberfläche reflektiert und von der Bodenstation wieder empfangen werden (Primärradar) oder die das Flugobjekt veranlassen, selbstständig bestimmte Informationen an die Bodenstation zurückzusenden (Sekundärradar). In beiden Fällen ist es jedoch notwendig, dass sich das Flugobjekt innerhalb eines von der Reichweite der Radar-Bodenstation abhängigen Abdeckungsbereiches befindet, da ansonsten keine verwertbaren Signale entstehen. Da derartige Radar-Bodenstationen im Aufbau sehr teuer sind und allein aus geographischen Gegebenheiten nicht überall auf der Welt installiert werden können, finden sich heutzutage Radar-Bodenstationen meist nur in verkehrsreichen Regionen oder in Küstennähe, um zumindest an Verkehrsknotenpunkten eine Überwachung zu gewährleisten. Eine weltweite, lückenlose Radarüberwachung von Flugobjekten ist dadurch allerdings nicht möglich.

Befindet sich ein Flugobjekt außerhalb der Radarabdeckung, so halten die entsprechenden Kontroll- und Leitstationen, welche für die Flugsicherung des entsprechenden Flugobjektes verantwortlich sind, in regelmäßigen Abständen Kontakt über das VHF-Funksystem. Das VHF-Funksystem basiert jedoch ausschließlich auf dem Prinzip von Sprachmeldungen, so dass es gerade bei Langstreckenflügen nicht selten vorkommt, dass die entsprechenden Kontroll- und Leitstationen über einen längeren Zeitraum keine Informationen von dem Flugzeug erhalten, da beispielsweise der Autopilot eingeschaltet ist und die Piloten mit anderen Tätigkeiten beschäftigt sind.

Der Zustand des Flugobjektes ist somit über einen längeren Zeitraum ungewiss, da eine permanente, lückenlose Überwachung nicht gegeben ist.

Neben dem bereits angesprochenen passiven- bzw. Sekundärradar sind sogenannte ADS-Systeme bekannt ("Automatic Dependent Surveillance" oder "Automatische bordabhängige Überwachung"). Bei den ADS-Systemen werden an Bord des Flugzeuges automatisch und ständig entsprechende Flugdaten gesammelt, einschließlich der aktuellen Position, die beispielsweise mit Hilfe eines Satellitennavigationssystems wie GPS oder Galileo ermittelt werden kann. Andere Flugdaten können beispielsweise die Flugnummer, der Flugzeugtyp, die Geschwindigkeit, die Flughöhe und die Flugrichtung sein. Wird von dem Flugobjekt ein entsprechendes, von einer Bodenstation ausgesendetes Funksignal empfangen, so sendet das Flugobjekt diese Flugdaten mit Hilfe einer entsprechenden ADS-Nachricht an die Bodenstation aus. Die Bodenstation empfängt die Nachricht und kann die in der Nachricht enthaltenen Flugdaten den Fluglotsen oder Leitstellen anzeigen. Diese Systeme, welche die Nachrichten auf Anforderung aussenden, werden häufig auch als ADS-C oder ADS-A bezeichnet. Hierfür sind die Flugzeuge mit so genannten FANS-1/A Geräten ausgerüstet, die eine Funk-Datenverbindung über VHF, HF oder Satellitenfunk ermöglichen und somit auch eine Überwachung der Flugzeuge im ozeanischen Luftraum. Allerdings werden die Positionsmeldungen aufgrund der niedrigen Datenrate in zeitlichen Abständen von ca. 15 Minuten oder mehr gesendet, so dass eine kontinuierliche Flugüberwachung nicht gegeben ist.

Neben den Systemen, die ausschließlich auf Anforderung ihre Flugdaten aussenden, existiert noch das sogenannte ADS-B (Broadcast) System, welches selbsttätig in periodischen, zeitdiskreten Abständen von ca. einer halben Sekunde eine entsprechende ADS-B Nachricht aussendet. Befindet sich das Flugobjekt in einer verkehrsdichten Region, so befinden sich in der Regel hier eine ganze Reihe von Bodenstationen, welche die automatisch ausgesendeten ADS-Nachrichten empfangen können. Darüber hinaus ist es auch möglich, dass andere Flugobjekte, die über einen entsprechenden Empfänger verfügen, ADS-B Nachrichten von anderen Flugzeugen empfangen können, um so in Abhängigkeit von den in der Nachricht enthaltenen Flugdaten selbstständig ein Verkehrslagebild des umgebenden Luftraumes aufzubauen.

Da heutzutage die Ausrüstung von Verkehrsflugzeugen mit Mode-S-Transpondern verflichtend vorgeschrieben ist, hat sich das Datenübertragungssystem Mode-S 1090ES als De-facto-Standard für ADS-B in der allgemeinen Luftfahrt durchgesetzt. Mode-S 1090ES basiert dabei auf den für Mode-S festgelegten Modulationsverfahren und Datenformaten, wobei jedem Flugzeug eine feste, weltweit einmalige 24bit-Adresse zugeordnet ist. Der Downlink im Mode-S erfolgt dabei mit einer Frequenz von 1090 MHz.

Die ADS-B Systeme haben jedoch wie alle funkortungsbasierten Systeme den entscheidenden Nachteil, dass sich das Flugzeug im Empfangsbereich einer entsprechenden Empfangseinheit befinden muss, damit die von den Flugzeugen ausgesendeten ADS-B Nachrichten auch von der entsprechenden übergeordneten Leitstelle empfangen werden können. Aufgrund der begrenzten Reichweite der ADS-B Signale ist auch mit einem derartigen System eine weltweite, lückenlose Überwachung mit Hilfe von Bodenstationen nicht möglich, da zum einen aus Kostengründen und zum anderen aus geographischen Gegebenheiten nicht überall auf der Welt Bodenstationen zur lückenlosen Abdeckung errichtet werden können.

Hierfür schlagen die DE 10 2008 026 415 A1 und DE 10 2008 013 357 A1 vor, dass entsprechende ADS-B Empfänger an einem Satelliten angeordnet werden, der in einer relativ niedrigen Umlaufbahn die Erde umkreist und somit die von den Flugzeugen ausgesendeten ADS-B Signale empfangen kann. Über eine direkte Verbindung mit einer Leitstation oder über einen entsprechenden Relaissatelliten können die empfangenen ADS-B Nachrichten dann an die Leitstelle weitergeleitet werden, wo sie dann dem Fluglotsen entsprechend angezeigt werden können. Somit lässt sich eine Abdeckung mit ADS-B Empfängern in Gebieten gewährleisten, wo an und für sich keine Bodenstationen aufgebaut werden können.

Der entscheidende Nachteil liegt in dem ADS-B System selbst begründet. Denn aufgrund des verwendeten Puls-Position-Modulationsverfahrens kommt es bei mehreren Sendern, die sich im Empfangsbereich eines einzelnen Empfängers befinden, zu entsprechenden Signalstörungen, die mitunter von dem einzelnen Empfänger dann nicht mehr aufgelöst werden können, so dass er die empfangenen Signale verwerfen muss. Denn bei der Puls-Positions-Modulation wird die sequentielle Bitfolge der zu übertragenden Information dadurch codiert, dass eine Pulsfolge mit einem zugrunde liegenden Zeitraster gesendet wird, wobei jeder Puls in Abhängigkeit von einer codierten Eins oder Null eine entsprechende Position in seinem Zeitfenster hat. Treffen nun zwei oder mehr Pulsfolgen zeitlich überlagert beim Empfänger ein, so ist dieser nicht mehr in der Lage, die Positionen der empfangenen Pulse fehlerfrei zu bestimmen und damit die übertragenen Informationen zu decodieren. Diese Form der Signalstörung wird auch Garbling genannt.

Werden jedoch ADS-B Empfänger an Satelliten angeordnet, so sind sie allgemeinhin in der Lage, innerhalb eines recht großen Empfangsbereiches ADS-Signale empfangen zu können. Dadurch steigt auch die Wahrscheinlichkeit, dass sich mehrere Sender innerhalb des Empfangsbereiches des einen Satelliten-Empfängers befinden, was letztendlich dazu führt, dass auch die Wahrscheinlichkeit von Überlagerungen der von den Flugzeugen ausgesendeten Signale ansteigt. Tritt der Satellit auf seiner Umlaufbahn dann auch noch in eine verkehrsreiche bzw. verkehrsdichte Region ein, beispielsweise in Ballungszentren oder Flugknotenpunkten, so ist aufgrund der Vielzahl von Sendern ein störungsfreier Empfang derartiger ADS-Signale nicht mehr zu gewährleisten. Im Hinblick auf die Flugsicherung ist die Ausfallsicherheit derartiger Systeme jedoch ein entscheidendes Kriterium.

Aus der EP 2 058 956 A2 ist ein Verfahren zur aeronautischen Funkkommunikation bekannt, um Flugzeugen eine flächendeckende sprachgestützte Funkkommunikation mit Bodenstationen zu ermöglichen. Hierfür wird der Abdeckungsbereich eines Kommunikationssatelliten logisch in mehrere Sektoren unterteilt, wobei die logische Unterteilung mit Hilfe von eindeutigen Identifikationsziffern (ID) erfolgen soll.

### Aufgabe

Es ist daher Aufgabe der vorliegenden Erfindung eine verbesserte Vorrichtung anzugeben, mit der störanfällige Flugsicherungs-Funksignale, die von Flugzeugen ausgesendet werden, sicher mit Hilfe eines Empfangssatelliten empfangen werden können.

### Lösung

Die Aufgabe wird mit dem Satelliten der eingangs genannten Art erfindungsgemäß dadurch gelöst, dass die Antennenanordnung eine Mehrzahl von Richtantennen aufweist, die innerhalb eines definierten Sende- und/oder Empfangsbereiches jeweils einen Sende- und/oder Empfangssektor bilden und zum Senden und/oder Empfangen von Flugsicherungs-Funksignalen in ihrem jeweiligen Sende- und/oder Empfangssektor ausgebildet sind.

Demnach wird erfindungsgemäß vorgeschlagen, dass der Satellit mindestens eine Sende- und/oder Empfangseinheit aufweist, die über eine Antennenanordnung verfügt, mit der Flugsicherungs-Funksignale empfangen oder ausgesendet werden können. Somit können ADS-B Funksignale, die von Flugzeugen in periodischen Abständen ausgesendet werden, mit Hilfe der Empfangseinheit und der Antennenanordnung auf dem Satelliten empfangen werden. Die enthaltenen Flugdaten können dann an eine Bodenstation bzw. Flugleitstation weitergeleitet werden, um sie dort den Fluglotsen zu präsentieren. Darüber hinaus lässt sich mit einer entsprechenden, an dem Satelliten angeordneten Sendeeinheit über die Antennenanordnung auch entsprechende ADS-B Funksignale aussenden, um so beispielsweise bei Flugzeugen im Empfangsbereich der Antennenanordnung ein Radarbild von dem umgebenden Luftraum zu übertragen. Somit kann auch ein Flugzeug innerhalb des Empfangsbereiches aktuelle Flugdaten anderer Flugzeuge erhalten.

Die Richtantennen weisen Sender und Empfänger mit zugehörigen Decodern auf.

Derartige Empfangssatelliten, die sich aufgrund der begrenzten Reichweite der Flugsicherungs-Funksignale in einer relativ niedrigen Umlaufbahn (LEO: Low Earth Orbit) befinden, weisen eine relativ hohe Bahngeschwindigkeit auf, so dass sie in kurzen Abständen zumindest teilweise verkehrsreiche bzw. verkehrsdichte Regionen überfliegen. Aufgrund des durch die Anordnung der Empfangseinheit an einen Satelliten bedingten großzügigen Empfangsbereiches sowie dem Puls-Position-Modulationsverfahren bei ADS-B Flugsicherungs-Funksignalen besteht insbesondere in verkehrsdichten bzw. verkehrsreichen Regionen das erhebliche Problem, dass sich die Funksignale gegenseitig stören und somit ein sicherer Empfang der Funksignale nicht mehr gewährleistet werden kann (Garbling). Durch Überlagerung mehrerer Funksignale wird dabei die zu übertragende Information, die sich aus der Position der einzelnen Impulse innerhalb einer Impulssequenz ergibt, für den Empfänger unbrauchbar, da er nicht mehr feststellen kann, zu welchem Signal der Impuls gehört und an welcher Position er sich dabei befindet.

Um diese Problematik zu lösen, schlägt die vorliegende Erfindung vor, dass die Antennenanordnung eine Mehrzahl von Richtantennen aufweist, die jeweils einen Sende- und/oder Empfangssektor bilden, wobei die Summe aller Sende- und/oder Empfangssektoren den gesamten Sende- und/oder Empfangsbereich, der letztendlich durch die Umlaufbahn der Satelliten bedingt ist, abdecken. Innerhalb ihres jeweiligen Sende- und/oder Empfangssektors sind die Richtantennen der Antennenanordnung so ausgebildet, dass sie vorwiegend die Funksignale empfangen, die auch innerhalb dieses Sektors von Flugzeugen ausgesendet wurden. Zu jeder Richtantenne gehört auch ein eigener Empfänger mit Decoder. Darüber hinaus werden von einer Sendeeinheit die Flugsicherungs-Funksignale über die Richtantenne so ausgesendet, dass sie nur innerhalb des jeweiligen Sendesektors der Richtantenne von einem Flugobjekt empfangbar sind.

Durch die Aufteilung des gesamten Empfangsbereiches in mehrere Sektoren wird dabei die Wahrscheinlichkeit von Signalkollisionen verringert, so dass auch bei störanfälligen ADS-B Signalen ein sicherer Empfang über den Satelliten gewährleistet werden kann.

Um auch innerhalb des definierten Empfangsbereiches stets einen lückenlosen Empfang sicherstellen zu können, ist es besonders vorteilhaft, dass die Richtantennen derart angeordnet und ausgerichtet sind, dass benachbarte Sende- und/oder Empfangssektoren sich zumindest in ihren Randbereichen überlappen. Dies verhindert letztlich auch das Bilden von Empfangslücken, was insbesondere auch im Hinblick auf die gewährleistende Flugsicherheit nicht tragbar ist.

Des Weiteren ist es ganz besonders vorteilhaft, wenn die Richtantennen derart angeordnet werden, dass sie sich innerhalb des Empfangsbereiches zumindest teilweise so überlappen, dass bei Eintritt eines Sende- und/oder Empfangssektors in eine stark funkbelastete Region zumindest ein anderer Sende- und/oder Empfangssektor, der mit dem ersten Sende- und/oder Empfangssektor überlappt, noch nicht in diesen Bereich eingetreten ist. Wird somit ein Sende- und/oder Empfangssektor und der dazu gehörige Empfänger mit Decoder aufgrund von einer starken Funkbelastung überlastet, so kann durch die Überlappung mit einem weiteren Sende- und/oder Empfangssektor derart, dass dieser noch nicht in die belastete Region hinreicht, sichergestellt werden, dass zumindest im Bereich des zweiten Sende- und/oder Empfangssektors ein ungestörter Empfang weiterhin möglich ist. Dies erhöht wesentlich die Ausfallsicherheit der gesamten Empfangseinheit.

Vorteilhafterweise ist die Sende- und/oder Empfangseinheit derart eingerichtet, dass sie die Richtwirkung der Richtantennen anpassen kann. So können beispielsweise in Abhängigkeit von einer prognostizierten und/oder aktuellen Funkbelastung in mindestens einem Sende- und/oder Empfangssektor die Richtwirkung der einzelnen Richtantennen so angepasst werden, dass ein möglichst fehlerfreier und ungestörter Empfang und ein ungestörtes Senden von Flugsicherheits-Funksignalen möglich ist. So lässt sich die räumliche Ausdehnung eines Sende- und/oder Empfangssektors durch Anpassen der Richtwirkung ebenso an die aktuellen Bedingungen adaptieren, wie durch eine räumliche Positionsverschiebung des Sende- und/oder Empfangssektors. So ist es beispielsweise denkbar, dass Sende- und/oder Empfangssektoren eines durch Funksignale überlasteten Sende- und/oder Empfangsgebiets derart in ihrer räumlichen Ausdehnung bzw. in ihrer räumlichen Orientierung angepasst werden, so dass in den nunmehr verkleinerten Sende- und Empfangssektoren weniger Signalüberlappungen stattfinden.

Demgemäß ist es ganz besonders vorteilhaft, wenn die Sende- und/oder Empfangseinheit zum Anpassen der Richtwirkung einer oder mehrerer Richtantennen derart eingerichtet ist, dass die räumliche Ausdehnung und/oder die räumliche Orientierung der Sende- und/oder Empfangssektoren der einzelnen Richtantennen an eine prognostizierte oder aktuelle Funkbelastung angepasst werden kann, insbesondere dass die funkbelasteten Sende- und/oder Empfangssektoren in ihrer räumlichen Ausdehnung verkleinert werden.

Darüber hinaus kann die Richtwirkung einer oder mehrerer Richtantennen auch in Abhängigkeit von einer Häufigkeit einer Funksignalstörung, in Abhängigkeit von einer Verkehrsdichte in einem oder mehreren Sektoren oder in Abhängigkeit der Position des Satelliten auf seiner Umlaufbahn angepasst werden. So kann die Empfangseinheit beispielsweise an festen Satellitenpositionen grundsätzlich die Richtwirkung entsprechend anpassen, da an bestimmten Umlaufpositionen der Satelliten eine erhöhte Verkehrsdichte angenommen wird und somit auch ein erhöhtes Funkaufkommen. Denkbar ist aber auch, dass die Sende- und/oder Empfangseinheiten entsprechende Funkstörungen detektieren und in Abhängigkeit der Häufigkeit der detektierten Funkstörungen die Richtwirkung der Richtantennen entsprechend anpassen. Somit können auch zufällig entstandene Funkbelastungen, die außerhalb von entsprechenden Verkehrsknotenpunkten liegen, erkannt und entsprechend darauf adäquat reagiert werden.

Des Weiteren ist es denkbar und vorteilhaft, wenn die Antennenanordnung eine Schwenkvorrichtung aufweist, mit der eine oder mehrere Richtantennen gegenüber dem Satelliten verschwenkt werden können. So kann die räumliche Orientierung der Sende- und/oder Empfangssektoren der jeweiligen Richtantenne entsprechend verändert werden, um beispielsweise auf eine erhöhte Funkbelastung zu reagieren oder die Richtantenne aus einem verkehrsdichten und somit funkbelasteten Gebiet in ihrer Richtwirkung herauszuhalten, um so weiterhin in den verkehrsarmen Regionen auch weiterhin einen Funkverkehr zu gewährleisten. Die Überlastung einer Richtantenne in einem verkehrsreichen Gebiet ist dabei dann unkritisch, wenn die Überwachung dann mit Hilfe von alternativen Überwachungssystemen, wie beispielsweise Bodenradar, gewährleistet ist.

Darüber hinaus ist es ganz besonders vorteilhaft, wenn die Sende- und/oder Empfangseinheit zum Nachführen der Richtwirkung einer oder mehrerer Richtantennen eingerichtet ist. Aufgrund der Tatsache, dass sich der Satellit mit einer relativ hohen Geschwindigkeit auf einer niedrigen Umlaufbahn bewegt, erfolgt auch in kurzer Zeit eine relativ große Ortsveränderung. Wurde die Richtwirkung einer oder mehrerer Richtantennen auf die Überwachung eines bestimmten Gebiets sowie eine entsprechende Funkbelastung angepasst, so ist dann besonders vorteilhaft, wenn diese Anpassung bei der weiteren Bewegung des Satelliten auf seiner Umlaufbahn nachgeführt wird, so dass zu jedem Zeitpunkt immer die optimale Anpassung an das zu überwachende Gebiet und dessen momentane oder prognostizierte Funkbelastung besteht und bestehen bleibt.

Im Übrigen wird die Aufgabe auch erfindungsgemäß gelöst mit einer Sende- und/oder Empfangseinheit mit Befestigungsmitteln zum Befestigen an einem Satelliten und mit einer Antennenanordnung, die eine Mehrzahl von Richtantennen aufweist, wobei die Richtantennen innerhalb eines definierten Empfangsbereiches jeweils einen Sende- und/oder Empfangssektor bilden und zum Senden und/oder Empfangen von Flugsicherungs-Funksignalen in ihrem jeweiligen Sende- und/oder Empfangssektor ausgebildet sind.

Die Erfindung wird anhand der beigefügten Zeichnungen beispielhaft näher erläutert. Es zeigen:
- Figur 1: - schematische Darstellung eines Überwachungssystems mit einem erfindungsgemäßen Satelliten;
- Figur 2: - Darstellung eines Empfangsbereiches einer Empfangseinheit mit mehreren sektorweisen Richt-Empfangsantennen.

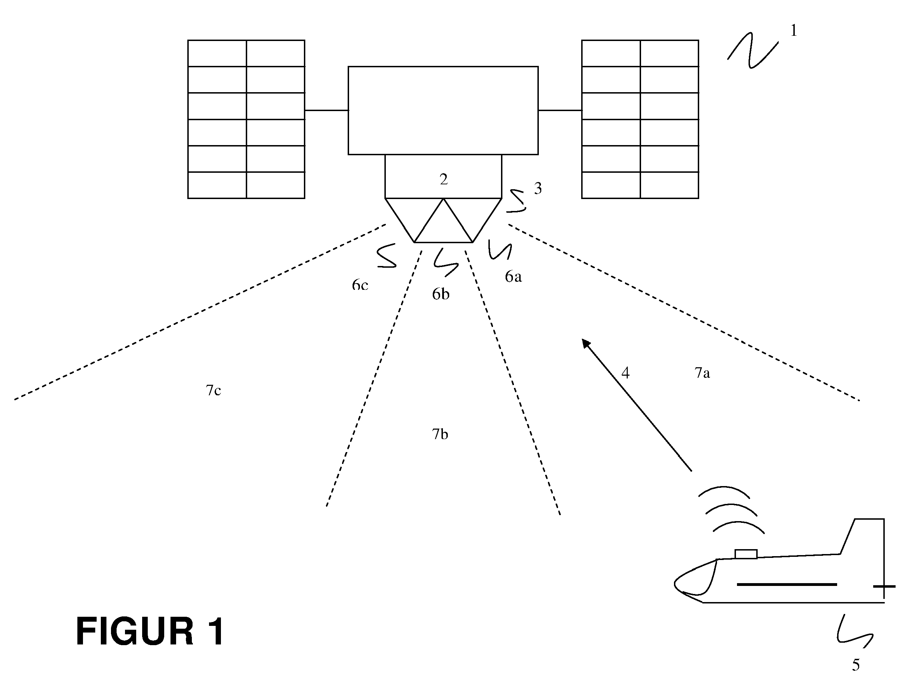

Figur 1 zeigt ein Überwachungssystem für Flugobjekte mit dem erfindungsgemäßen Satelliten 1. Der Satellit 1, der sich bevorzugt in einer niedrigen Umlaufbahn (LEO) befindet, weist eine Sende- und/oder Empfangseinheit 2 auf, die über eine Antennenanordnung 3 zum Empfang von ADS-B Signalen 4 eingerichtet ist. Derartige ADS-B Signale 4 werden dabei von Flugzeugen 5 periodisch ausgesendet, um entsprechende Flugdaten der entsprechenden Flugobjekte 5 an eine nicht dargestellte Leitstation weiterzuleiten. Diese in den ADS-B Signalen 4 enthaltenen Flugdaten können nun auch über einen Satelliten und deren Kommunikationssystem empfangen und weitergeleitet werden.

Erfindungsgemäß weist die Antennenanordnung 3 der Sende- und/oder Empfangseinheit 2 mehrere Richtantennen 6a, 6b und 6c auf, die innerhalb eines definierten Empfangsbereiches zum Senden und/oder Empfangen von ADS-B Signalen in ihrem jeweiligen gebildeten Sende- und/oder Empfangssektor 7a, 7b oder 7c ausgebildet sind. Somit können ADS-B Signale 4, die in Verbindung mit anderen Sendern recht störanfällig sind, nur in dem Sende- und/oder Empfangssektor 7a empfangen werden, in dem sich letztendlich auch der entsprechende Sender, also das Flugobjekt 5 befindet. In den anderen Sende- und/ oder Empfangssektoren 7b und 7c werden dagegen keine Signale empfangen, so dass diese Sektoren für andere Sender zur Verfügung stehen, so dass innerhalb des definierten Empfangsbereiches, der letztendlich durch die Summe der Einzelsektoren 7a bis 7c gebildet wird, ungestört mehrere Flugobjekte überwacht werden können.

Vorteilhafterweise sind die Richtantennen nun so ausgelegt, dass sie ihre Richtwirkung an die eine prognostizierte oder tatsächliche Funkbelastung angepasst werden kann. Befinden sich beispielsweise mehrere Flugzeuge 5 innerhalb des Sende- und/oder Empfangssektors 7a, so kommt es in diesem Sende- und/oder Empfangssektor 7a zu einer Überlastung des zu der Richtantenne 6a gehörigen Empfängers mit Decoder, da hier so viele Sender Funksignale aussenden, die sich gegenseitig stören können (Garbling) und somit ein sicherer Empfang der Flugdaten nicht mehr möglich ist.

Durch das Verkleinern des Sende- und/oder Empfangssektors 7a kann dabei zum Einen erreicht werden, dass einige der Sender nunmehr in einen nachfolgenden Sende- und/oder Empfangssektor, beispielsweise 7b, hineinrücken, da dieser Sende- und/oder Empfangssektor 7b an die Verkleinerung des benachbarten Sende- und/oder Empfangssektors 7a angepasst wird. Somit werden die Sender, die sich vorher alle in einem Sektor befunden haben, auf zwei oder mehrere Sektoren aufgeteilt. Ein Verkleinern des überlasteten Sende- und/oder Empfangssektors 7a und ein entsprechendes Vergrößern und Anpassen der übrigen Sektoren, so dass der gesamte Empfangsbereich durch die Sektoren lückenlos abgedeckt wird, führt auch dazu, dass ein wesentlich größerer Bereich des definierten Empfangsbereiches weiterhin ungestört abgehört werden kann, da sich die Belastung nunmehr auf einen kleinen Bereich bezieht. Eine Überlastung eines relativ geringen Sende- und/oder Empfangssektors ist dann unkritisch, wenn weitere sekundäre Überwachungsmöglichkeiten, wie beispielsweise Bodenstationen, existieren. Dies ist meist dann der Fall, wenn der Satellit auf seiner Umlaufbahn über Verkehrsknotenpunkte kommt.

Da sich sowohl das Flugobjekt 5 als auch der Satellit 1 mit durchaus hohen Geschwindigkeiten relativ zueinander bewegen, ist es des Weiteren vorteilhaft, wenn die an die momentane oder prognostizierte Funkbelastung angepasste Richtwirkung nachgeführt wird, so dass trotz der Relativbewegung der beiden Objekte 5 und 1 zueinander die Richtwirkung zu jeder Zeit optimal an die Situation angepasst ist. Dabei wird nicht nur die räumliche Ausdehnung eines Sende- und/oder Empfangssektors verändert, sondern auch seine Orientierung innerhalb des Empfangsbereiches.

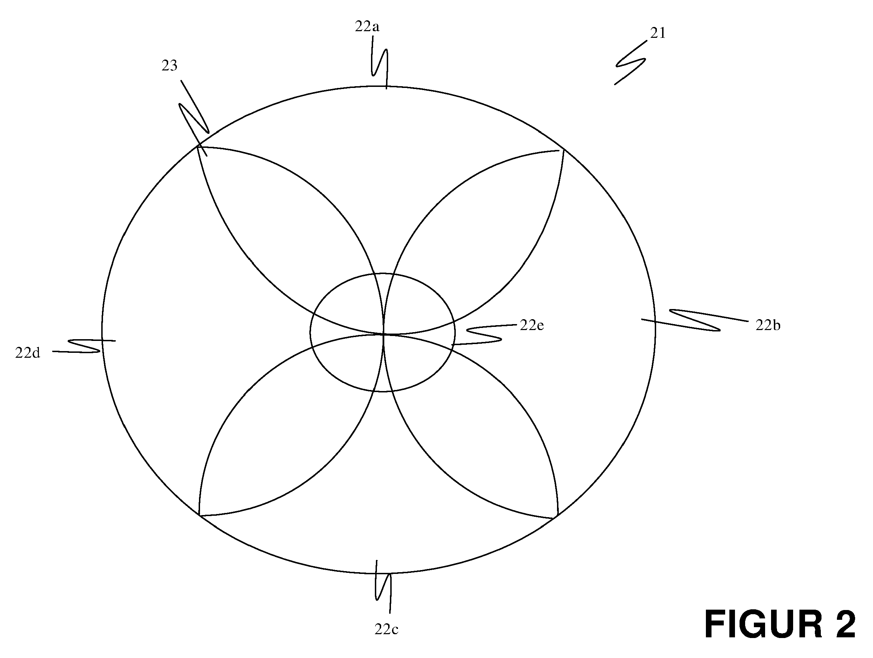

Figur 2 zeigt einen definierten Sende- und/oder Empfangsbereich 21 aus der Sicht des Satelliten in Richtung Erdoberfläche. Die an dem Satelliten angeordneten Richtantennen bilden jeweils einen Sende- und/oder Empfangssektor 22a bis 22e, wobei die Richtantennen so eingerichtet sind, dass sich die Sende- und/oder Empfangssektoren 22a bis 22e zumindest teilweise in Überlappungsbereichen 23 überlappen, um so einen lückenlosen Empfang bzw. ein lückenloses Senden innerhalb des definierten Sende- und/oder Empfangsbereiches 21 zu gewährleisten.

Kommt es nun, wie bereits oben angesprochen, beispielhaft im Sende- und/ oder Empfangssektor 22a, zu einer Funküberlastung, so kann dieser Sende- und/oder Empfangssektor in seiner räumlichen Ausdehnung verkleinert werden, um so entweder andere Sender und Empfänger auf andere Sektoren aufzuteilen, oder um das überlastete Gebiet zu verkleinern, um so innerhalb des definierten Sende- und/oder Empfangsbereiches 21 eine größere, ungestörte Abdeckung zu erreichen.

Weiterhin ist es besonders vorteilhaft, wenn der mittig angeordnete Sende- und/oder Empfangssektor 22e in seiner Orientierung so verändert wird, dass er vollständig in den oberen Sende- und/oder Empfangssektor 22a hineinreicht. Durch diese vollständige Überlappung kann erreicht werden, dass Flugzeuge, die sich innerhalb des Sende- und/oder Empfangssektors 22a befinden und im überlappenden Sende- und/oder Empfangssektor 22e befinden, von einer Störung des Sende- und/oder Empfangssektors 22a nicht betroffen sind. Somit kann auch hier die Ausfallsicherheit wesentlich erhöht werden.

## Patentansprüche

1. Satellit (1) mit mindestens einer Sende- und/oder Empfangseinheit (2), die eine Antennenanordnung (3) zum Senden und/oder Empfangen von ADS-B Funksignalen (4) hat, **dadurch gekennzeichnet, dass** die Antennenanordnung (3) eine Mehrzahl von Richtantennen (6a bis 6c) aufweist, die innerhalb eines definierten Sende- und/oder Empfangsbereiches (21) jeweils einen Sende- und/oder Empfangssektor (7a bis 7c, 22a bis 22e) bilden und zum Senden und/oder Empfangen von ADS-B Funksignalen (4) in ihrem jeweiligen Sende- und/oder Empfangssektor (7a bis 7c, 22a bis 22e) ausgebildet sind.

2. Satellit (1) nach Anspruch 1, **dadurch gekennzeichnet, dass** die Richtantennen (6a bis 6c) derart eingerichtet sind, dass sich jeweils benachbarte Sende- und/oder Empfangssektoren (21) insbesondere in einem Randbereich (23) überlappen.

3. Satellit (1) nach Anspruch 1 oder 2, **dadurch gekennzeichnet, dass** die Richtantennen (6a bis 6c) zur Überlappung ihrer Sende- und/oder Empfangssektoren (7a bis 7c, 22a bis 22e) derart eingerichtet sind, dass bei Eintritt mindestens eines Sende- und/oder Empfangssektors (7a bis 7c, 22a bis 22e) in eine durch ADS-B Funksignale (4) belastete Region wenigstens ein mit diesem Sektor überlappender Sender- und/oder Empfangssektor (7a bis 7c, 22a bis 22e) noch nicht in die belastete Region reicht.

4. Satellit (1) nach einem der vorhergehenden Ansprüche, **dadurch gekennzeichnet, dass** die Sende- und/oder Empfangseinheit (2) zum Anpassen der Richtwirkung einer oder mehrerer Richtantennen (6a bis 6c) in Abhängigkeit von einer prognostizierten und/oder aktuellen Funkbelastung durch ADS-B Funksignale (4) in mindestens einem Sende- und/oder Empfangssektor (7a bis 7c, 22a bis 22e) eingerichtet ist.

5. Satellit (1) nach einem der vorhergehenden Ansprüche, **dadurch gekennzeichnet, dass** die Sende- und/oder Empfangseinheit (2) zum Anpassen der Richtwirkung einer oder mehrerer Richtantennen (6a bis 6c) derart eingerichtet ist, dass räumliche Ausdehnung und/oder Orientierung von Sende- und/oder Empfangssektoren (7a bis 7c, 22a bis 22e) mit einer gegenüber anderen Sende- und/oder Empfangssektoren (7a bis 7c, 22a bis 22e) höheren prognostizierten und/oder aktuellen Funkbelastung verkleinert und/oder verschoben wird.

6. Satellit (1) nach einem der vorhergehenden Ansprüche, **dadurch gekennzeichnet, dass** die Sende- und/oder Empfangseinheit (2) zum Anpassen der Richtwirkung einer oder mehrerer Richtantennen (6a bis 6c) in Abhängigkeit von einer Häufigkeit einer Funksignalstörung in mindestens einem Sende- und/oder Empfangssektor (7a bis 7c, 22a bis 22e), einer Verkehrsdichte in mindestens einem Sende- und/oder Empfangssektor (7a bis 7c, 22a bis 22e) und/oder einer Position des Satelliten (1) auf seiner Umlaufbahn eingerichtet ist.

7. Satellit (1) nach einem der vorhergehenden Ansprüche, **dadurch gekennzeichnet, dass** diese Antennenanordnung (3) eine Schwenkvorrichtung aufweist, die zum Verschwenken einer oder mehrerer Richtantennen (6a bis 6c) gegenüber dem Satelliten eingerichtet ist.

8. Satellit (1) nach einem der vorhergehenden Ansprüche, **dadurch gekennzeichnet, dass** die Sende- und/oder Empfangseinheit (2) zum Nachführen der Richtwirkung einer oder mehrerer Richtantennen (6a bis 6c) eingerichtet ist.

9. Sende- und/oder Empfangseinheit (2), hergerichtet nach einem der vorhergehenden Ansprüche, mit Befestigungsmitteln zur Befestigung an einem Satelliten (1) und einer Antennenanordnung (3), die eine Mehrzahl von Richtantennen (6a bis 6c) aufweist, wobei die Richtantennen (6a bis 6c) innerhalb eines definierten Sende- und/oder Empfangsbereiches (21) jeweils einen Sende- und/oder Empfangssektor (7a bis 7c, 22a bis 22e) bilden und zum Senden und/oder Empfangen von ADS-B Funksignalen (4) in ihrem jeweiligen Sende- und/oder Empfangssektor (7a bis 7c, 22a bis 22e) ausgebildet sind.

## Claims

1. A satellite (1) having at least one transmitting and/or receiving unit (2), which has an antenna arrangement (3) for transmitting and/or receiving ADS-B radio signals (4), **characterized in that** the antenna arrangement (3) has a plurality of directional antennas (6a to 6c) which in each case form a transmitting and/or receiving sector (7a to 7c, 22a to 22e) within a defined transmitting and/or receiving area (21), and are designed to transmit and/or receive ADS-B radio signals (4) in their respective transmitting and/or receiving sector (7a to 7c, 22a to 22e).

2. The satellite (1) as claimed in claim 1, **characterized in that** the directional antennas (6a to 6c) are configured so that adjacent transmitting and/or receiving sectors (21) in each case overlap one another, particularly in a peripheral area (23).

3. The satellite (1) as claimed in claim 1 or 2, **characterized in that** the directional antennas (6a to 6c) are configured for the overlapping of the transmitting and/or receiving sectors (7a to 7c, 22a to 22e) in such a way that, if at least one transmitting and/or receiving sector (7a to 7c, 22a to 22e) enters a region with a traffic load due to ADS-B radio signals (4), at least one transmitting and/or receiving sector (7a to 7c, 22a to 22e) overlapping with this sector does not yet extend into the traffic-loaded region.

4. The satellite (1) as claimed in one of the preceding claims **characterized in that** the transmitting and/or receiving unit (2) is configured to adapt the directional effect of one or more directional antennas (6a to 6c) depending on a predicted and/or current radio traffic load due to ADS-B radio signals (4) in at least one transmitting and/or receiving sector (7a to 7c, 22a to 22e).

5. The satellite (1) as claimed in one of the preceding claims, **characterized in that** the transmitting and/or receiving unit (2) is configured to adapt the directional effect of one or more directional antennas (6a to 6c) in such a way that spatial extension and/or orientation of transmitting and/or receiving sectors (7a to 7c, 22a to 22e) with a predicted and/or current radio traffic load which is higher compared with that of other transmitting and/or receiving sectors (7a to 7c, 22a to 22e) is reduced and/or shifted.

6. The satellite (1) as claimed in one of the preceding claims, **characterized in that** the transmitting and/or receiving unit (2) is configured to adapt the directional effect of one or more directional antennas (6a to 6c) depending on a frequency of a radio signal interference in at least one transmitting and/or receiving sector (7a to 7c, 22a to 22e), a traffic density in at least one transmitting and/or receiving sector (7a to 7c, 22a to 22e) and/or a position of the satellite (1) in its orbit.

7. The satellite (1) as claimed in one of the preceding claims, **characterized in that** this antenna arrangement (3) has a pivoting device which is configured to pivot one or more directional antennas (6a to 6c) in relation to the satellite.

8. The satellite (1) as claimed in one of the preceding claims, **characterized in that** the transmitting and/or receiving unit (2) is configured to track the directional effect of one or more directional antennas (6a to 6c).

9. A transmitting and/or receiving unit (2) configured according to one of the preceding claims, with fixing means for fixing to a satellite (1) and an antenna arrangement (3) which has a plurality of directional antennas (6a to 6c), wherein the directional antennas (6a to 6c) in each case form a transmitting and/or receiving sector (7a to 7c, 22a to 22e) within a defined transmitting and/or receiving area (21) and are designed to transmit and/or receive ADS-B radio signals (4) in their respective transmitting and/or receiving sector (7a to 7c, 22a to 22e).

## Revendications

1. Satellite (1) comprenant une unité d'émission et/ou de réception (2), laquelle comporte un arrangement d'antenne (3) destiné à émettre et/ou à recevoir des signaux radioélectriques ADS-B (4), **caractérisé en ce que** l'arrangement d'antenne (3) possède une pluralité d'antennes directionnelles (6a à 6c) qui, à l'intérieur d'une zone d'émission et/ou de réception (21) définie, forment respectivement un secteur d'émission et/ou de réception (7a à 7c, 22a à 22e) et sont configurées pour émettre et/ou recevoir des signaux radioélectriques ADS-B (4) dans leur secteur d'émission et/ou de réception (7a à 7c, 22a à 22e) respectif.

2. Satellite (1) selon la revendication 1, **caractérisé en ce que** les antennes directionnelles (6a à 6c) sont conçues de telle sorte que les secteurs d'émission et/ou de réception (21) respectivement voisins se chevauchent notamment dans une zone de bordure (23).

3. Satellite (1) selon la revendication 1 ou 2, **caractérisé en ce que** les antennes directionnelles (6a à 6c), en vue du chevauchement de leurs secteurs d'émission et/ou de réception (7a à 7c, 22a à 22e), sont conçues de telle sorte que lors de l'entrée d'au moins un secteur d'émission et/ou de réception (7a à 7c, 22a à 22e) dans une région chargée par des signaux radioélectriques ADS-B (4), au moins un secteur d'émission et/ou de réception (7a à 7c, 22a à 22e) qui chevauche ce secteur ne parvient pas encore dans la région chargée.

4. Satellite (1) selon l'une des revendications précédentes, **caractérisé en ce que** l'unité d'émission et/ou de réception (2) est conçue pour adapter l'effet directionnel d'une ou de plusieurs antennes directionnelles (6a à 6c) en fonction d'une la charge radioélectrique prévisionnelle et/ou actuelle par les signaux radioélectriques ADS-B (4) dans au moins un secteur d'émission et/ou de réception (7a à 7c, 22a à 22e).

5. Satellite (1) selon l'une des revendications précédentes, **caractérisé en ce que** l'unité d'émission et/ou de réception (2) est conçue pour adapter l'effet directionnel d'une ou de plusieurs antennes directionnelles (6a à 6c) de telle sorte que l'extension et/ou l'orientation dans l'espace de secteurs d'émission et/ou de réception (7a à 7c, 22a à 22e) ayant une charge radioélectrique prévisionnelle et/ou actuelle supérieure à celle des autres secteurs d'émission et/ou de réception (7a à 7c, 22a à 22e) est réduite et/ou décalée.

6. Satellite (1) selon l'une des revendications précédentes, **caractérisé en ce que** l'unité d'émission et/ou de réception (2) est conçue pour adapter l'effet directionnel d'une ou de plusieurs antennes directionnelles (6a à 6c) en fonction d'une fréquence d'une perturbation du signal radioélectrique dans au moins un secteur d'émission et/ou de réception (7a à 7c, 22a à 22e), une densité de trafic dans au moins un secteur d'émission et/ou de réception (7a à 7c, 22a à 22e) et/ou une position du satellite (1) sur son orbite.

7. Satellite (1) selon l'une des revendications précédentes, **caractérisé en ce que** cet arrangement d'antenne (3) possède un dispositif de pivotement qui est conçu pour faire pivoter une ou plusieurs antennes directionnelles (6a à 6c) par rapport au satellite.

8. Satellite (1) selon l'une des revendications précédentes, **caractérisé en ce que** l'unité d'émission et/ou de réception (2) est conçue pour poursuivre l'effet directionnel d'une ou de plusieurs antennes directionnelles (6a à 6c).

9. Unité d'émission et/ou de réception (2), préparée selon l'une des revendications précédentes, comprenant des moyens de fixation servant à la fixation à un satellite (1) et un arrangement d'antenne (3), lequel possède une pluralité d'antennes directionnelles (6a à 6c), les antennes directionnelles (6a à 6c), à l'intérieur d'une zone d'émission et/ou de réception (21) définie, formant respectivement un secteur d'émission et/ou de réception (7a à 7c, 22a à 22e) et étant configurées pour émettre et/ou recevoir des signaux radioélectriques ADS-B (4) dans leur secteur d'émission et/ou de réception (7a à 7c, 22a à 22e) respectif.
